(19) Europäisches Patentamt

European Patent Office

Office européen des brevets

(11) **EP 1 675 404 A2**

(12) **EUROPEAN PATENT APPLICATION**

(43) Date of publication:
28.06.2006 Bulletin 2006/26

(51) Int Cl.:
*H04N 7/26* (2006.01)    *H04N 7/50* (2006.01)
*H04N 7/34* (2006.01)

(21) Application number: 05090354.1

(22) Date of filing: 21.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 22.12.2004 JP 2004371112

(71) Applicant: NEC Corporation
Tokyo 108-01 (JP)

(72) Inventors:
• Watanabe, Kazuteru
c/o NEC Corporation
Tokyo 108-01 (JP)
• Ozawa, Kazunori
c/o NEC Corporation
Tokyo 108-01 (JP)
• Dei, Hiroaki
c/o NEC Corporation
Tokyo 108-01 (JP)
• Koyama, Kazuhiro
c/o NEC Corporation
Tokyo 108-01 (JP)

(74) Representative: Wenzel & Kalkoff
Grubes Allee 26
22143 Hamburg (DE)

(54) **Efficient selection of intra coding modes**

(57)    Disclosed are an apparatus and method that make high-speed mode selection possible using an evaluation standard of high encoding efficiency in intra prediction. The apparatus includes a first cost calculator (104) for generating cost values from difference information indicative of differences between prediction signals, which have been generated by a prediction signal generator, and a moving picture signal that is input to a moving picture compression encoding apparatus; a preliminary selector (105) for selecting at least two prediction modes based upon the cost values and outputting these prediction modes to a second cost calculator (106); the second cost calculator (106) for frequency-converting the prediction modes that have been output from the preliminary selector (105) and generating new cost values; and a prediction mode selector (107) for selecting the optimum prediction mode based upon the cost values prevailing after the frequency conversion.

FIG . 3

## EP 1 675 404 A2

**Description**

BACKGROUND OF THE INVENTION

This invention relates to a technique for the compression encoding of a moving picture and, more particularly, to a moving picture compression encoding method, apparatus and program for performing encoding upon selecting a mode of intra prediction (intraframe prediction) based upon evaluation values of a plurality of types.

FIELD OF THE INVENTION

In H.264/MPEG-4 Part 10 (ISO/IEC 14496-10) (referred to as "H.264" below) (see Non-Patent Document 1), intra prediction involves 4x4 and 16x16 blocks with regard to the luminance component, and there are prediction modes of nine types and four types, respectively. Further, there are four types of prediction modes with regard to an 8x8 block for the color-difference component.

In contribution JVT-11049d0.doc (Non-Patent Reference 2) at a meeting of the JVT (Joint Video Team) performing H.264 standardization work, the following have been proposed as an evaluation measure for selecting a prediction mode in intra prediction:

(a) SAD (Sum of Absolute Differences), which generates a cost value of difference information indicative of a difference between a moving picture signal that is input to a moving picture compression encoding system and a prediction signal that is output from a prediction signal generating system; and
(b) SATD (Sum of Absolute Transformed Differences), which subjects this difference information to a Hadamard transform and generates cost values for all modes.

In H.264 referential software (Joint Model, referred to as "JM" below) that has been developed as part of the standardization activities by the JVT, the SAD and the SATD are employed in selecting an intra prediction mode. However, cost values for when a prediction mode is selected are all found based upon either the SAD or the SATD.
Techniques for selecting a prediction scheme and block size are known in the art (e.g., see Patent Documents 1 and 2 below). Patent Document 1 discloses a moving picture predictive encoding scheme in which prediction errors based upon a plurality of prediction methods that differ for respective ones of blocks of various block sizes are obtained, a prediction method that is suited to the block concerned and a prediction error are selected adaptively by evaluating each prediction error by first evaluating means, and a block size that is optimum for encoding is selected adaptively by second evaluating means for every part of a moving picture by evaluating the prediction error regarding each block size which has been obtained by the first evaluation means. Further, Patent Document 2 discloses a moving picture predictive encoding scheme adapted to transmit block-size information and prediction-scheme type to a receiving side, detect changeless portions and portions of sudden change based upon results of DCT processing, and increase or decrease block size in accordance with each portion detected to thereby enable the selection of block sizes optimum for changeless portions and for suddenly changing portions of a picture. Further, Patent Document 3 discloses a moving picture predictive encoding scheme in which the prediction method is changed over adaptively in conformity with the local quality of a picture, as a result of which the overall transmission efficiency is improved. Furthermore, Patent Document 4 discloses an arrangement having first encoding means for obtaining an approximate plane for every image data block and encoding information that specifies the approximate plane as well as a difference value between the approximate plane and a block; second encoding means for selecting a prediction scheme from a plurality of prediction schemes block by block, and performing encoding by the scheme selected; and means for selecting either the first encoding means or the second encoding means block by block.
In the prior art described in Patent Documents 1 to 3, however, only SAD is used as the measure for evaluating the intra prediction scheme. As a consequence, encoding efficiency declines markedly in comparison with a case where intra prediction is performed based upon SATD.
[Patent Document 1]
Japanese Patent No. 2608909
[Patent Document 2]
Japanese Patent No. 2702139
[Patent Document 3]
Japanese Patent No. 2716703
[Patent Document 4]
Japanese Patent Kokai Publication No. JP-A-9-9265

[Non-Patent Document 1]
H.264/MPEG-4 Part 10 (ISO/IEC 14496-10) Internet
<URL:http://www.itu.int/rec/recommendation.asp?type=item&|ang=e&p arent=T-REC-H.264-200305-I>
[Non-Patent Document 2]
JVT-1049d0.doc Internet
<ftp://standards.polycom.com/2003_09_SanDiego>

The following problems arise with the moving picture compression encoding schemes of the prior art set forth above:

The first problem is that encoding efficiency is poor when a mode is selected based solely upon difference information (SAD) between an input signal and prediction signal with regard to an intra prediction scheme.

The reason for this is as follows: Data that has been encoded by a moving picture compression encoding scheme has undergone a frequency conversion with regard to the difference information between the input signal and the prediction signal. Difference information alone, therefore, exhibits poor accuracy as a standard for evaluating encoding efficiency.

The second problem is that in a case where a frequency conversion is performed with regard to difference information and cost calculated in order to improve encoding efficiency, a very large amount of computation is performed to select the optimum mode.

The reason for this is that since a plurality of prediction modes exist for each of a plurality of block sizes in order to perform intra prediction, it is necessary that values obtained by frequency-converting the difference information be calculated with respect to all modes in a case where the optimum prediction mode is selected.

SUMMARY OF THE INVENTION

Accordingly, it is an object of the present invention to provide a moving picture compression encoding apparatus, method and program whereby the encoding efficiency of an intra predicting (intraframe predicting) unit can be improved.

Another object of the present invention is to provide a moving picture compression encoding apparatus, method and program having an intra predicting unit that is capable of high-speed processing.

According to a first aspect of the present invention, the above and other objects are attained by providing a moving picture compression encoding apparatus in which an intra predicting unit performs a multiple-stage search for a prediction mode, the device comprising means for calculating first evaluation values based upon difference information indicative of differences between a moving picture signal that is input to the moving picture compression encoding apparatus and prediction signals that have been generated by the intra predicting unit; means for preliminarily selecting a plurality of prediction modes based upon the first evaluation values; means for calculating second evaluation values based upon difference information of the plurality of prediction modes preliminarily selected; and means for selecting one prediction mode from the plurality of preliminarily selected prediction modes based upon the second evaluation values.

According to another aspect of the present invention, the foregoing object is attained by providing a moving picture compression encoding apparatus for a case where a plurality of block sizes exist, comprising: means for calculating first evaluation values based upon difference information indicative of differences between a moving picture signal that is input to the moving picture compression encoding apparatus and prediction signals that have been generated by an intra predicting unit; means for preliminarily selecting a plurality of prediction modes based upon the first evaluation values; means for calculating second evaluation values based upon difference information of the prediction modes preliminarily selected; means for selecting one prediction mode from the preliminarily selected prediction modes based upon the second evaluation values; and means for selecting an optimum block size from the second evaluation values.

According to another aspect of the present invention, the foregoing object is attained by providing a moving picture compression encoding method, comprising the steps of: calculating first evaluation values based upon differences information indicative of differences between an input moving picture signal and prediction signals that have been generated by an intra predicting unit; preliminarily selecting a plurality of prediction modes based upon the first evaluation values; calculating second evaluation values based upon difference information of the prediction modes preliminarily selected; and selecting one prediction mode from the preliminarily selected prediction modes based upon the second evaluation values.

According to another aspect of the present invention, the foregoing object is attained by providing a program for causing a computer constituting a moving picture compression encoding apparatus to execute the following processing: processing for calculating first evaluation values based upon difference information indicative of differences between an input moving picture signal and prediction signals that have been generated by an intra predicting unit; processing for preliminarily selecting a plurality of prediction modes based upon the first evaluation value; processing for calculating second evaluation values based upon difference information of the prediction modes preliminarily selected; and processing for selecting one prediction mode from the preliminarily selected prediction modes based upon the second evaluation values.

The meritorious effects of the present invention are summarized as follows.

The present invention is such that when a mode is selected, encoding efficiency can be improved greatly and processing speeded up in comparison with a method of selecting a mode based solely upon difference information (SAD).

In accordance with the present invention, it is unnecessary to frequency-convert difference information with regard to all modes when a mode is selected by an intra predicting unit. As a result, the amount of computation can be reduced greatly and a high performance approaching that of SATD can be provided in terms of efficiency.

BRIEF DESCRIPTION OF THE DRAWINGS

Fig. 1 is a block diagram illustrating the overall structure of an embodiment of the present invention;
Figs. 2, 3 and 4 are block diagrams illustrating the overall structures of first, second and third embodiments of the present invention, respectively;
Figs. 5 and 6 are block diagrams illustrating a portion of the third embodiment;
Figs. 7 and 8 are block diagrams illustrating the overall structures of fourth and fifth embodiments of the present invention, respectively;
Fig. 9 is a diagram illustrating the overall structure of the fifth embodiment;
Fig. 10 is a diagram illustrating the structure of a sixth embodiment of the present invention;
Fig. 11 is a diagram illustrating an example of actions and effects of the present invention; and
Fig. 12 is a diagram illustrating another example of actions and effects of the present invention.

PREFERRED EMBODIMENTS OF THE INVENTION

A preferred mode of practicing the present invention will be described in detail with reference to the accompanying drawings.

An intra prediction apparatus according to this mode of practicing the present invention includes a prediction signal generator (103) for generating prediction signals, the generator receiving a reconstructed signal (13) that is part of an image signal of an adjacent block for which encoding ended before the encoding of a block to undergo intra prediction; a prediction mode decision unit (108) having a cost calculator (104) for generating cost values based upon difference information indicative of differences between the prediction signals generated by the prediction signal generator (103) and a moving picture signal that is input to the moving picture compression encoding apparatus, a preliminary selector (105) for selecting and outputting to a cost calculator (106) at least two prediction modes (e.g., two or more high-order modes of small cost values), based upon the cost values of the difference information, from among all modes of an intra predicting unit, the cost calculator (106) for frequency-converting difference information and generating new cost values with regard to the prediction modes that have been output from the preliminary selector (105), and a prediction mode selector (107) for selecting the optimum prediction mode based upon the cost values obtained after the frequency conversion; and a prediction signal call unit (109) for reading in a prediction signal, which corresponds to the prediction mode (115) that has been output from the prediction mode decision unit (108), from a prediction signal memory (102) and outputting this signal as a result of intra prediction.

In this mode of practicing the present invention, if a plurality of intra predicting units are provided and a plurality of block sizes exist, then means are provided for changing a prediction mode discriminating method and selecting a prediction mode by the intra predicting units for every block size, and selecting the block size. Alternatively, means are provided for selecting the prediction mode by the intra predicting units for every block size using any one of a plurality of prediction mode discriminating methods, and selecting the block size.

Embodiments of the present invention will now be described.

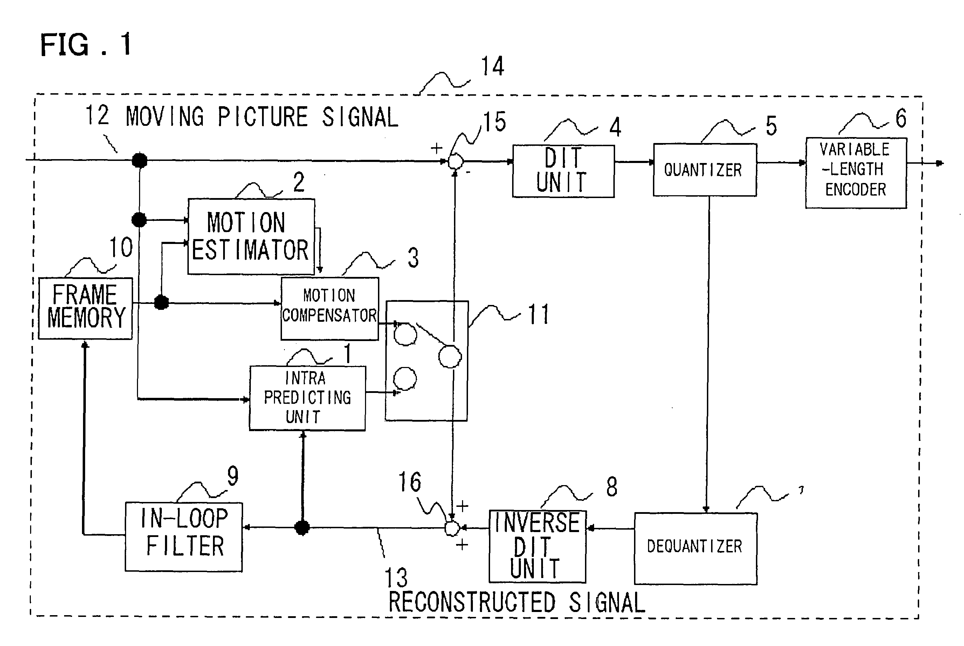

Fig. 1 is a block diagram illustrating the structure of an embodiment of the present invention.

As shown in Fig. 1, a moving picture signal 12 is input to an intra predicting unit 1 and to a motion estimator 2. A motion compensator 3 performs motion compensation based upon a motion vector detected by the motion estimator 2 and information in a frame memory 10. A switch 11 switches between the output of the intra predicting unit 1 and the output of the motion compensator 3. The result of subtracting the output of the switch 11 from the moving picture signal 12 in a subtractor 15 is subjected to a DIT (Discrete Integer Transform) in a DIT unit 4, the signal from the DIT unit 4 is quantized by a quantizer 5 and the quantized signal is variable-length encoded by a variable-length encoder 6. The output of the quantizer 5 is dequantized by a dequantizer 7 and subjected to an inverse DIT in an inverse DIT unit 8. The output of the inverse DIT unit 8 and the output of the switch 11 are added by an adder 16, the sum is supplied to the intra predicting unit 1 and to an in-loop filter 9 as a reconstructed signal 13, and the output of the in-loop filter 9 is supplied to the frame memory 10.

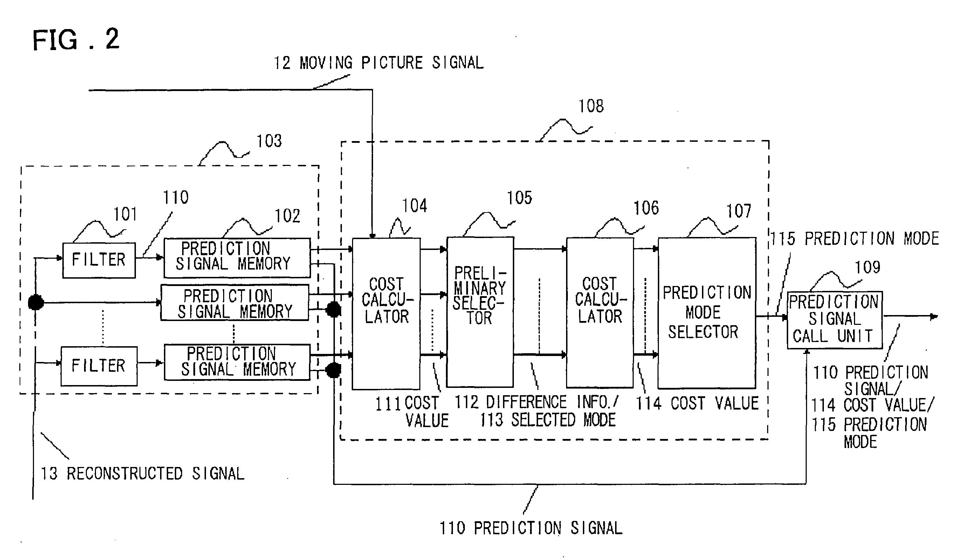

Fig. 2 is a block diagram illustrating the details of the intra predicting unit 1 shown in Fig. 1. The intra predicting unit 1 includes a prediction signal generator 103, a prediction mode decision unit 108 and a prediction signal call unit 109.

The prediction signal generator 103 includes a plurality of filters 101 that receive the reconstructed signal, and a plurality of prediction signal memories 102 that receive prediction signals 110 from respective ones of the filters 101.

The prediction mode decision unit 108 includes a cost calculator 104, the preliminary selector 105, a cost calculator 106 and a prediction mode selector 107.

The operation of the prediction signal generator 103 will be described first. In Fig. 2, the filters 101 subject the reconstructed signal 13 to filter processing that is based upon respective ones of prediction modes of a plurality of types that exist in the intra predicting unit and store the generated prediction signals 110 in the prediction signal memories 102, respectively.

With regard to the intra prediction, this is performed, as set forth in Non-Patent Document 1, using 4 or 16 pixels situated at the right end in a block to the left of the particular block, 4 or 16 pixels situated at the lower end in a block above or to the upper right of the particular block, and 1 pixel at the lower-right end of a block to the upper left of the particular block.

The following prediction modes are available in intra prediction:

- a prediction mode in which a pixel at the right end of a block adjacent to the left is adopted as a prediction signal of a pixel having the same height in the particular block;
- a prediction mode in which a pixel at the lower end of a block adjacent above is adopted as a prediction signal of a pixel of the same column in the particular block;
- a prediction mode in which the average value of pixels used in prediction is adopted as all prediction signals of the particular block; and
- a prediction mode in which a prediction signal is generated by applying filter processing to a plurality of pixel values used in prediction based upon the position of the particular block.

The prediction signal memories 102 are devices for storing the prediction signals 110 that are output from the filters 101. The prediction signals 110 are output to the cost calculator 104 of the prediction mode decision unit 108 and to the prediction signal call unit 109.

The reconstructed signal 13 is part of an image signal of an adjacent block for which encoding ended before the encoding of the particular block to undergo intra prediction.

The prediction signals 110 are signals generated using the filters 101 that differ depending upon the prediction mode, or are signals having the same value as the reconstructed signal 13.

The operation of the prediction mode decision unit 108 will be described next.

The cost calculator 104 calculates difference information 112 between the prediction signals 110 and moving picture signal 12 and outputs cost values 111 to the preliminary selector 105. The cost calculator 104 calculates the following as the difference information (block difference) 112, by way of example:

$$\mathrm{Diff}(i,j) = \mathrm{Original}(i,j) - \mathrm{Prediction}(i,j) \qquad \dots (1)$$

where Prediction(i,j) is the prediction signal 110 and Original(i,j) is the moving picture signal 12.

The cost calculator 104 outputs SAD (Sum of Absolute Differences) [see Equation (2) below)], which is the sum of absolute values of the difference data Diff(i,j), as the cost value.

$$\mathrm{SAD} = \Sigma_{i,j} \, | \, \mathrm{Diff}(i,j) \, | \qquad \dots (2)$$

The preliminary selector 105 selects at least two prediction modes from among prediction modes for which the difference information of the cost values 111 is small and outputs the selected modes 113 to the cost calculator 106.

The cost calculator 106 calculates cost values 114 obtained by applying a frequency conversion to the difference information 112 corresponding to the selected modes 113 that have been output from the preliminary selector 105 and outputs the cost values 114 to the cost calculator 106. The cost calculator 106 calculates SATD (Sum of Absolute Transformed Differences) [see Equation (3) below] as the cost value 114 of the particular block, where SATD is the sum of absolute values of DiffT(i,j) obtained by subjecting the difference data Diff(i,j) to a frequency conversion by, e.g., a

Hadamard transform.
$$\mathrm{SATD} = ( \textstyle\sum_{i,j} \mid \mathrm{DiffT}(i,j) \mid )/2 \qquad\qquad \ldots (3)$$

The prediction mode selector 107 selects the optimum prediction mode 115 based upon the cost values 114 that have been output by the cost calculator 106 and outputs the prediction mode 115 and this cost value 114 as the results of intra prediction.

The moving picture signal 12 is the input image signal of the moving picture compression encoding apparatus, which is indicated at reference number 14.

The prediction signal call unit 109 reads in the prediction signal, which corresponds to the prediction mode 15 output from the prediction mode decision unit 108, from the prediction signal memory 102 and outputs this signal as the result of intra prediction. Alternatively, if intra prediction has been selected by the switch 11 in Fig. 1, then the prediction signal call unit 109 reads in the prediction signal, which corresponds to the prediction mode 15 output from the prediction mode decision unit 108, from the prediction signal memory 102 and outputs this signal as the result of intra prediction.

This embodiment has been described with regard to a two-stage search for a prediction mode. However, this can be expanded to three stages or more by the following means:

- selecting a plurality of modes by the second stage of the search and finding cost values from values obtained by quantizing DiffT(i,j) by the quantizer 5 of Fig. 1; or
- finding cost values from values obtained by encoding values, which are the result of quantizing DiffT(i,j) by the quantizer 5 of Fig. 1, by the variable-length encoder 6 of Fig. 1.

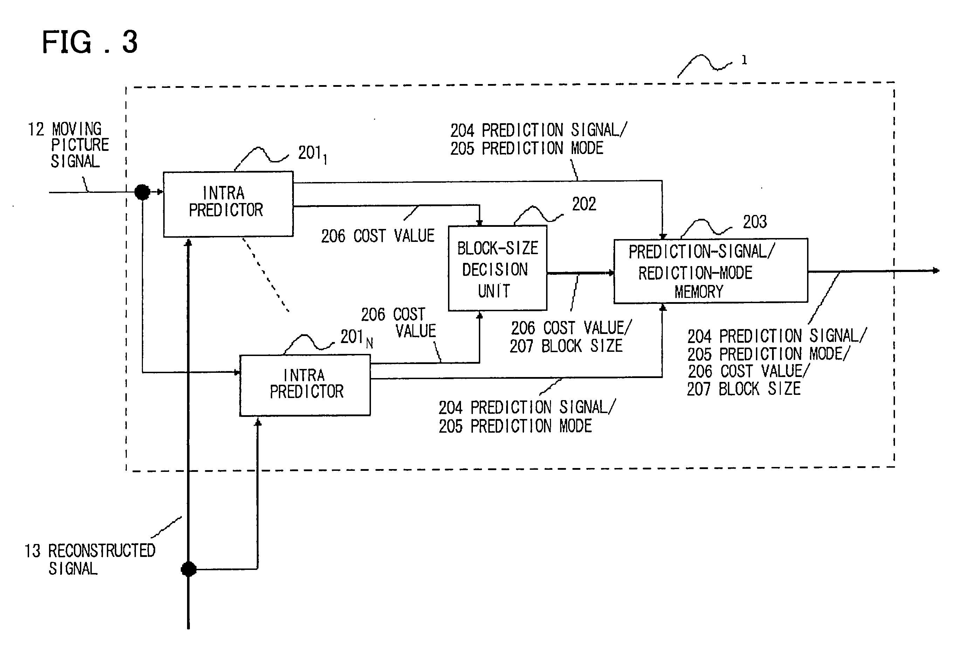

A second embodiment will now be described in detail with reference to Fig. 3.
Fig. 3 illustrates the structure of a section of the intra predicting unit 1 that selects block size in a case where there are N-number of block sizes. As shown in Fig. 3, the block-size selecting section includes intra predictors (intraframe predictors) $201_1$ to $201_N$ corresponding to the N block sizes, a block-size decision unit 202 and a prediction-signal / prediction-mode memory 203.

The block-size decision unit 202 selects a block size 207 having the smallest cost value 206 that is output from the intra predictors $201_1$ to $201_N$ and outputs the block size 207 and cost value 206 to the prediction-signal / prediction-mode memory 203.

For every block size, the prediction-signal / prediction-mode memory 203 stores prediction signals 204 and prediction modes 205 that are output from the intra predictors $201_1$ to $201_N$ and outputs the prediction signal 204 and prediction mode 205, which correspond to the block size 207 that is output from the block-size decision unit 202, together with the cost value 206 and block size 207 as the results of intra prediction. As each of the intra predictors $201_1$ to $201_N$ has the structure (the prediction signal generator 103, prediction mode decision unit 108 and prediction signal call unit 109) shown in Fig. 2 and operates in the same manner, these need not be described again.

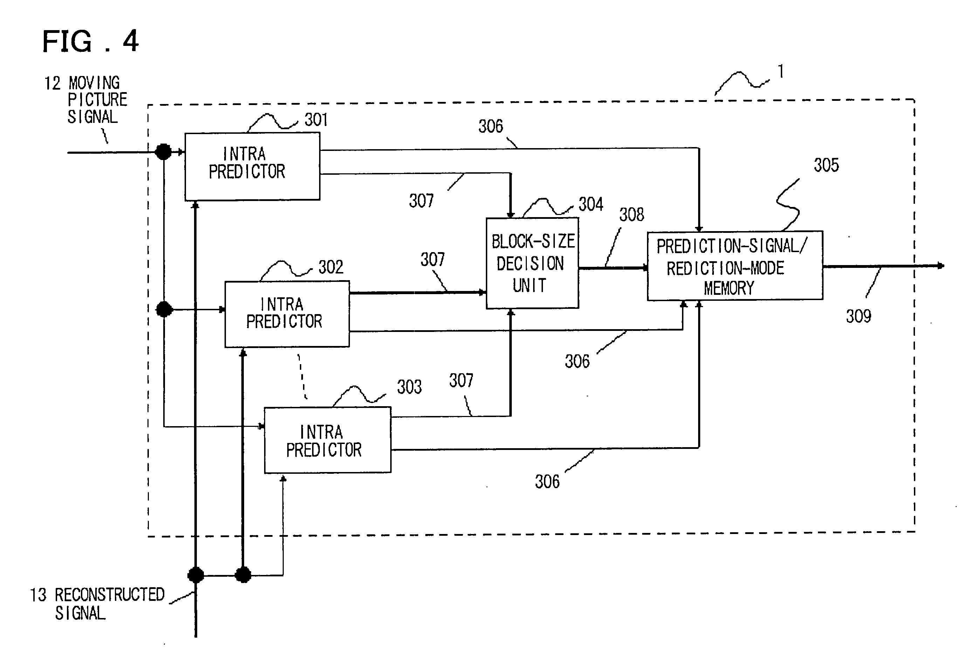

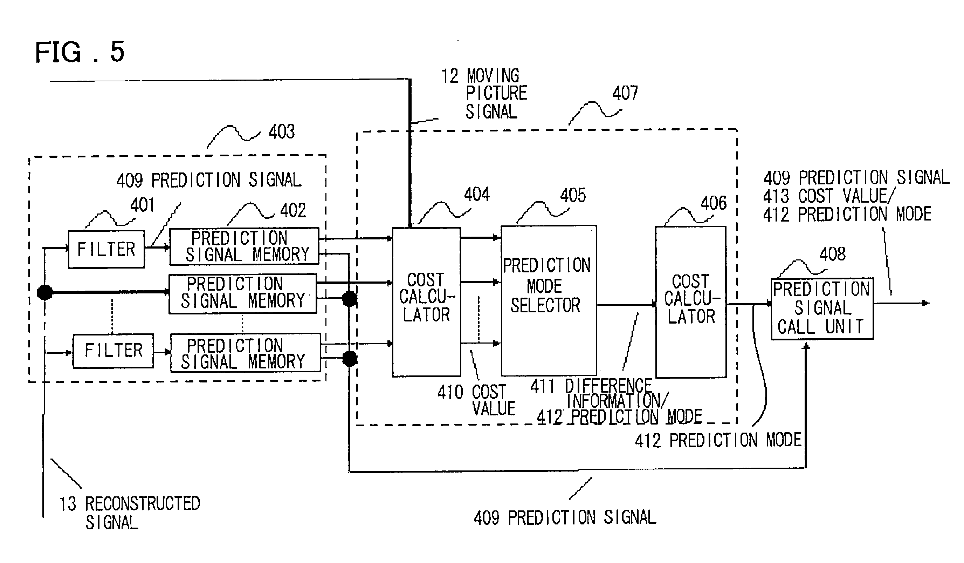

A third embodiment of the present invention will now be described in detail with reference to Figs. 4 and 5. Fig. 4 illustrates the structure of a section of the intra predicting unit 1 that selects block size in a case where a plurality of block sizes exist. This embodiment will be described for a case where there are three types of block sizes and three types of prediction mode discriminating methods.

The block-size selecting section includes intra predictors 301, 302, and 303 for which the prediction mode discriminating methods differ for each of the block sizes, a block-size decision unit 304 and a prediction-signal / prediction-mode memory 305. The structure and operation of the intra predictors 301, 302, and 303 will be described.

The intra predictors 301, 302, and 303 employ intra predicting units (see Figs. 2, 5 and 6) in which the prediction mode decision units differ for each of the block sizes.

As shown in Fig. 5, a prediction mode decision unit 407 includes a cost calculator 404, a prediction mode selector 405 and a cost calculator 406. A prediction signal generator 403 is identical with the prediction signal generator 103 of Fig. 2.

The cost calculator 404 calculates cost values 410 [e.g., the SAD in Equation (2) cited above] from difference information 411 indicative of differences between the moving picture signal 12, which is input to the moving picture compression encoding apparatus 14, and prediction signals generated by the prediction signal generator 403, and outputs the cost values to the prediction mode selector 405.

The prediction mode selector 405 selects the optimum prediction mode 412 from the cost values 410 and inputs this prediction mode and the difference information thereof to the cost calculator 406.

The cost calculator 406 applies a frequency conversion to the difference information 411 of the prediction mode 412, calculates a cost value 413 and outputs the prediction mode 412 and cost value 413 [e.g., SATD in Equation (3) cited above] as the results of intra prediction.

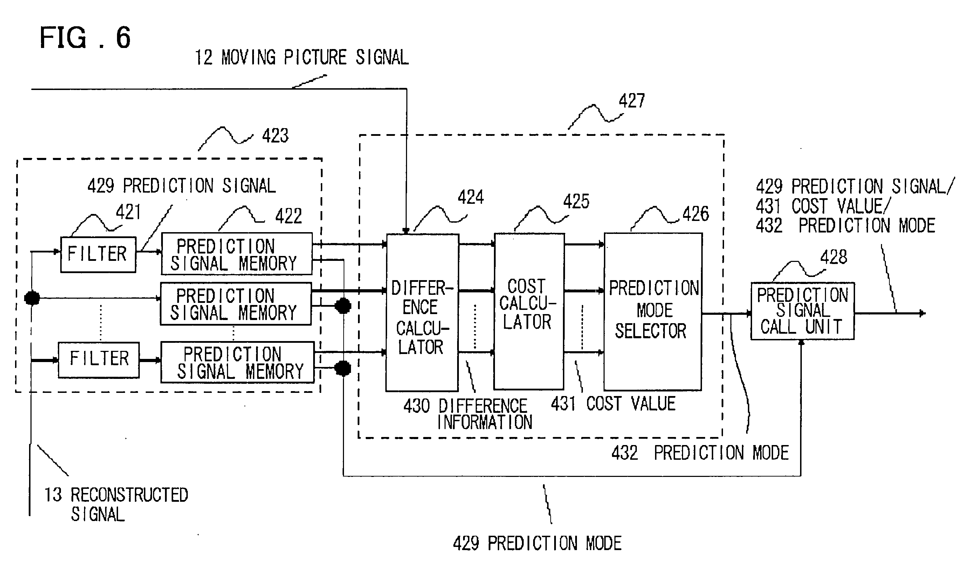

Further, in the arrangement shown in Fig. 6, a prediction mode decision unit 427 includes a difference calculator 424, a cost calculator 425 and a prediction mode selector 426.

The difference calculator 424 calculates difference information 430 [e.g., see Equation (1) cited above] indicative of differences between the moving picture signal 12, which is input to the moving picture compression encoding apparatus 14, and the outputs (prediction signals) from the prediction signal generator 423, and outputs the information to the cost calculator 425.

The cost calculator 425 applies a frequency conversion [e.g., DiffT (i,j) obtained by a Hadamard transform] to the difference information 430 [Diff(i,j)] of all prediction modes, calculates cost values 431 [e.g., SATD in Equation (3) cited above] and outputs these to the prediction mode selector 426.

The prediction mode selector 426 selects the optimum prediction mode 432 based upon the cost values 431 that have been output from the cost calculator 425 and outputs the optimum prediction mode 432 and cost value 431 as the results of intra prediction. Structural components and operations other than those set forth above are identical with those of the second embodiment and need not be described again.

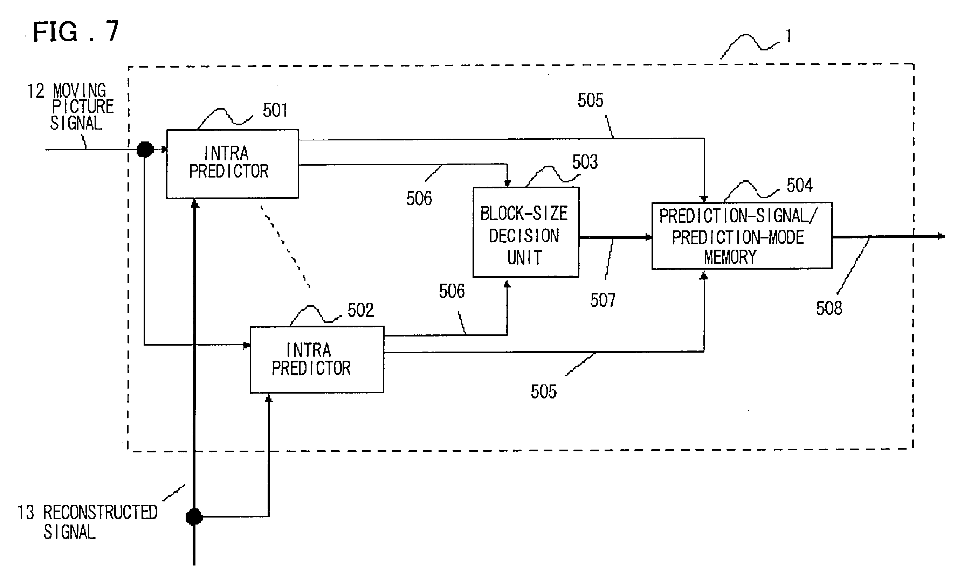

Next, a fourth embodiment will be described with reference to Fig. 7. Fig. 7 illustrates the structure of a section for selecting block size in a case where the intra prediction scheme involves a plurality of block sizes. This embodiment will be described for a case where there are M=3 prediction mode discriminating methods and two types of block sizes.

The section for selecting block size includes intra predictors 501, 502, a block-size decision unit 503 and a prediction-signal /prediction-mode memory 504.

The structure of the intra predictors 501, 502 will be described. The intra predictors 501, 502 can employ any of the structures shown in Figs. 2, 5 and 6. Structural components and operations other than those set forth above are identical with those of the third embodiment and need not be described again.

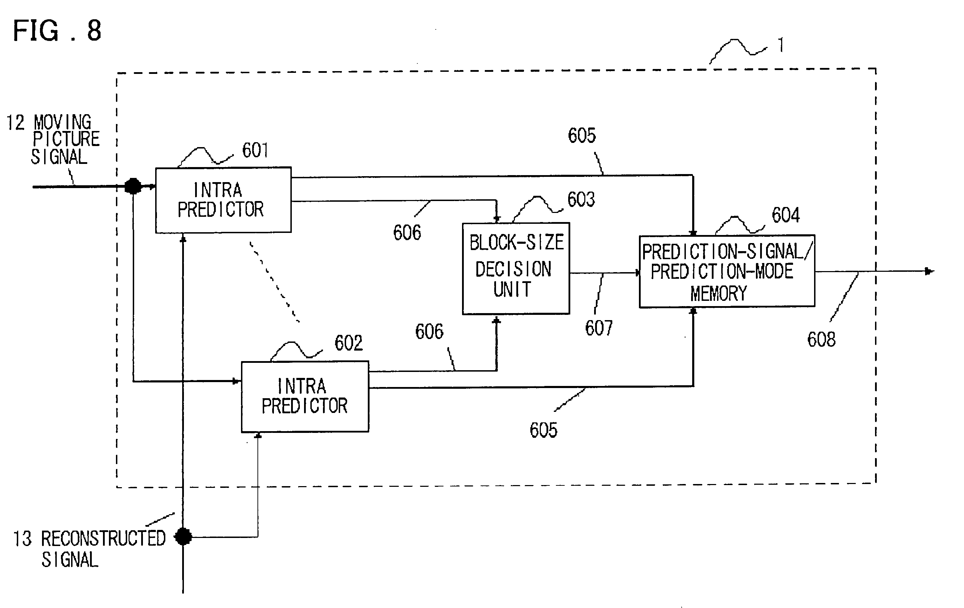

A fifth embodiment of the present invention will be described next. Fig. 8 illustrates the structure of a section for selecting block size in a case where the intra prediction scheme involves a plurality of block sizes. This embodiment will be described with regard to a case where there are two types of numbers of prediction modes selected. The block-size selecting section includes intra predictors 601 and 602 for which preliminarily selected numbers of prediction modes differ for each of the block sizes, a block-size decision unit 603 and a prediction-signal / prediction-mode memory 604.

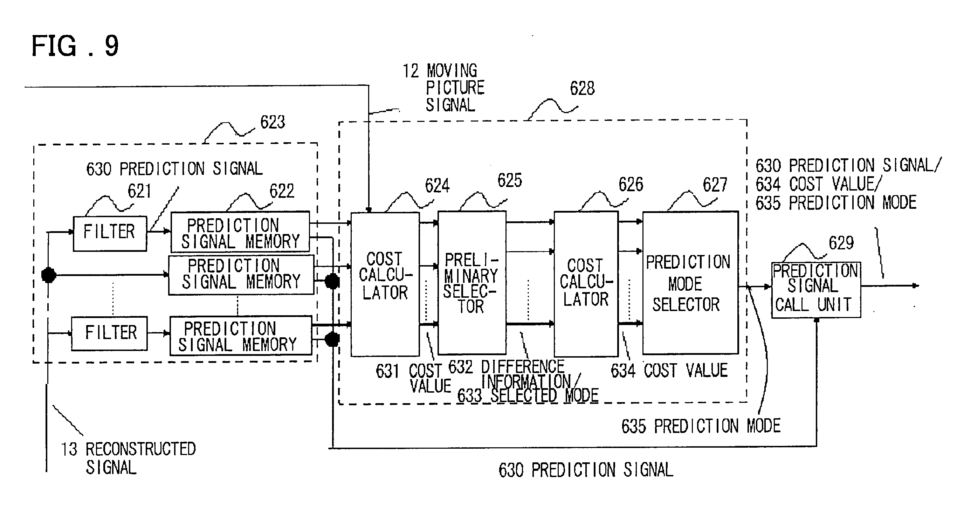

The structure of the intra predictors 601 and 602 will be described. Here the intra predictors 601 and 602 employ the intra predicting unit 1 of Fig. 2 or Fig. 9.

Figs. 2 and 9 differ in that the number of preliminarily selected prediction modes selected by the preliminary selector 105 differs from the number selected by a preliminary selector 625. Structural components and operations other than those set forth above are identical with those of the second embodiment and need not be described again.

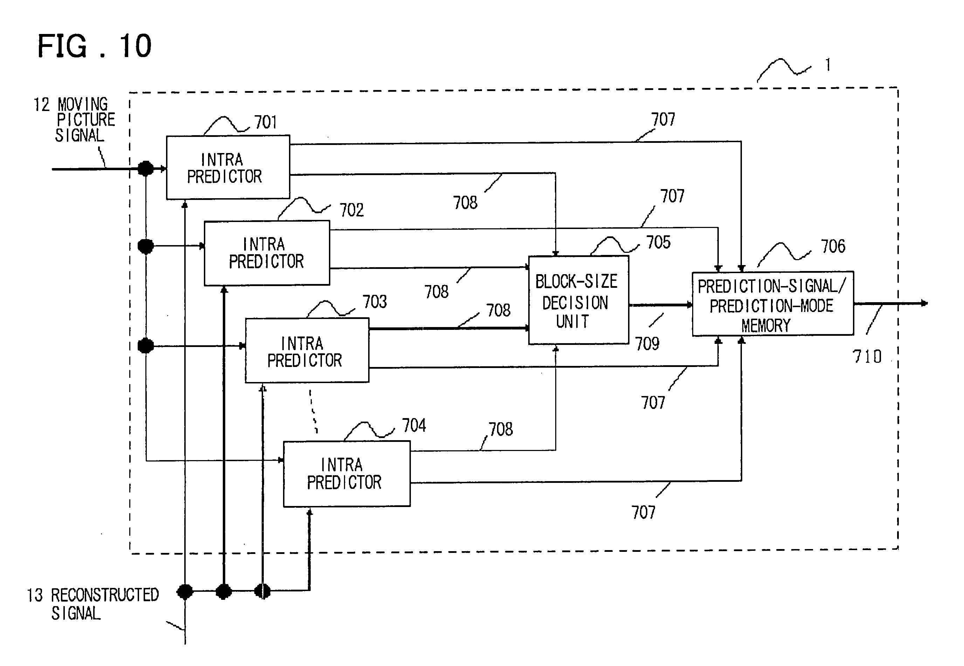

Next, a sixth embodiment of the present invention will be described with reference to Fig. 10. Fig. 10 illustrates the structure of a section of the intra predicting unit that selects block size in a case where a plurality of block sizes exist. This embodiment is such that in a case where there are four types of block sizes, three types of prediction mode discriminating methods exist and there are two types of preliminarily selected numbers of prediction modes in a prediction mode discriminating method that selects modes preliminarily. The block-size selecting section includes intra predictors 701, 702, 703, and 704 for which the preliminarily selected numbers of prediction modes or prediction mode discriminating methods differ for each of the block sizes, a block-size decision unit 705 and a prediction-signal /prediction-mode memory 706.

The structure of the intra predictors 701, 702, 703, and 704 will be described. Two of the intra predictors 701, 702, 703, and 704, for which the block sizes differ from one another, are constructed from Figs. 2 and 9. Figs. 2 and 9 differ in that the numbers of prediction modes selected preliminarily are different from each other. The intra predictors of the other block sizes are constructed from Figs. 5 and 6. Alternatively, the intra predictors of the other block sizes are constructed from Figs. 5, 6 or 8. Structural components and operations other than those set forth above are identical with those of the third or fourth embodiment and need not be described again.

Thus, the present invention is such that when mode selection is performed, encoding efficiency can be improved greatly in comparison with a method of selecting a mode based solely upon difference information (SAD).

In accordance with the present invention, it is unnecessary to frequency-convert difference information with regard to all modes when a mode is selected by an intra predicting unit. As a result, the amount of computation can be reduced greatly and a high performance approaching that of SATD can be provided in terms of efficiency.

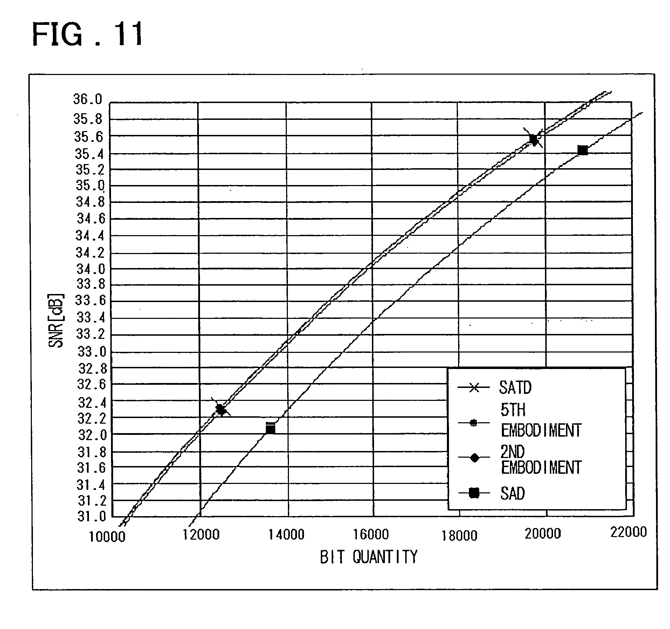

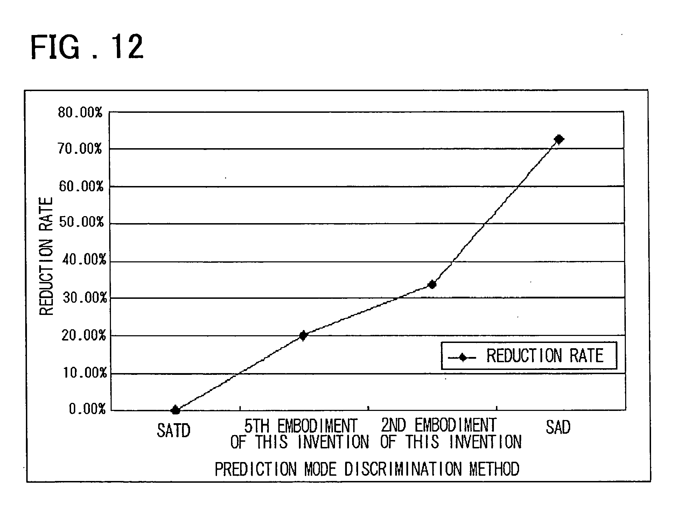

Figs. 11 and 12 show data illustrating the actions and effects of the present invention in a case where, with regard to the luminance component, two types of block sizes of intra prediction units, namely 4x4 and 16×16, exist, nine types of prediction modes exist for 4x4, and four types of prediction modes exist for 16x16.

Fig. 11 illustrates data relating to encoding efficiency [where the horizontal axis is a plot of the quantity of bits and the vertical axis a plot of SNR (signal-to-noise ratio)]. Fig. 12 illustrates the rate of reduction (vertical axis) in amount of computation according to each method (SADT, fifth embodiment, second embodiment and SAD) along the horizontal axis versus amount of computation (SATD) in mode selection by applying a frequency conversion to difference information with regard to all modes.

These items of data illustrate the second and fifth embodiments, the method (SAD) of selecting mode based solely upon difference information and the method (SATD) of selecting mode by applying a frequency conversion to difference information with regard to all modes.

Among the embodiments of the present invention, the first embodiment makes two preliminary selections for both 4x4 and 16x16 blocks, and the fifth embodiment makes four preliminary selections for a 4x4 block and two selections for a 16x16 block.

It will be understood from Fig. 11 that in bit streams of identical numbers of bits, the second and fifth embodiments of the invention provide an SNR higher in comparison with SAD and afford a higher encoding efficiency. The fifth embodiment provides an encoding efficiency equivalent to that obtained with SATD.

The second embodiment provides an encoding efficiency substantially equivalent to that obtained with SATD.

It will be understood from Fig. 12 that the second and fifth embodiments of the invention raise processing speed in comparison with SATD. The fifth and second embodiments make it possible to raise speed on the orders of 20% and 35%, respectively.

It should be noted that any combination of the disclosed and/or claimed elements, matters and/or items may fall under the aforementioned modifications.

## Claims

1. An apparatus for performing compression encoding of a moving picture, which includes an intra predicting unit, **characterized in that** the intra predicting unit comprises:

   means for calculating first evaluation values based upon difference information indicative of differences between a moving picture signal supplied to the apparatus and prediction signals generated by said intra predicting unit;
   means for preliminarily selecting a plurality of prediction modes based upon the first evaluation values;
   means for calculating second evaluation values based upon difference information of the plurality of prediction modes preliminarily selected; and
   means for selecting one prediction mode from the plurality of preliminarily selected prediction modes based upon the second evaluation values.

2. An apparatus for performing compression encoding of a moving picture, which includes an intra predicting unit, **characterized in that** the intra predicting unit comprises:

   means for calculating first evaluation values based upon difference information indicative of differences between a moving picture signal supplied to the apparatus and prediction signals generated by the intra predicting unit, for a case where a plurality of block sizes exist;
   means for preliminarily selecting a plurality of prediction modes based upon the first evaluation values;
   means for calculating second evaluation values based upon difference information of the prediction modes preliminarily selected;
   means for selecting one prediction mode from the preliminarily selected prediction modes based upon the second evaluation values; and
   means for selecting an optimum block size based upon the second evaluation values among a plurality of block sizes.

3. An apparatus for performing compression encoding of a moving picture, which includes an intra predicting unit, **characterized in that** the intra predicting unit comprises:

   means for changing a prediction mode discriminating method and selecting a prediction mode by the intra predicting unit on a per-block-size basis, for a case where a plurality of block sizes exist in the intra predicting unit; and
   means for selecting a block size.

4. An apparatus for performing compression encoding of a moving picture, which includes an intra predicting unit, **characterized in that** the intra predicting unit comprises:

   means for selecting a prediction mode by said intra predicting unit on a per-block-size basis using any one of a plurality of prediction mode discriminating methods; and
means for selecting a block size.

5. The apparatus as claimed in claim 3 or 4, wherein the intra predicting unit comprises:

means for calculating first evaluation values based upon difference information indicative of differences between an input moving picture signal and prediction signals that have been generated by said intra predicting unit;
means for preliminarily selecting a plurality of prediction modes based upon the first evaluation values;
means for calculating second evaluation values based upon difference information of the plurality of prediction modes preliminarily selected; and
means for selecting one prediction mode from the plurality of preliminarily selected prediction modes based upon the second evaluation values;
the number of modes preliminarily selected differing for every block size.

6. The apparatus as claimed in claim 3 or 4, wherein the intra predicting unit comprises:

means for calculating first evaluation values based upon difference information indicative of differences between an input moving picture signal and prediction signals that have been generated by said intra predicting unit;
means for preliminarily selecting a plurality of prediction modes based upon the first evaluation values;
means for calculating second evaluation values based upon difference information of the prediction modes preliminarily selected; and
means for selecting one prediction mode from the plurality of preliminarily selected prediction modes based upon the second evaluation values;
the number of modes preliminarily selected in said intra predicting unit differing for every block size.

7. The apparatus as claimed in claim 5 or 6, wherein said means for selecting block size selects block size based upon the second evaluation values output from a plurality of said intra predicting units, and outputs the selected block size and evaluation value thereof to a prediction-signal / prediction-mode memory;
said prediction-signal / prediction-mode memory stores, for every block size, a prediction signal and prediction mode output from said intra predicting units; and
said prediction-signal / prediction-mode memory outputs a prediction signal and prediction mode, which correspond to a block signal that is output from said means for selecting the block size, together with the evaluation value and block size as results of intra prediction.

8. An apparatus for performing compression encoding of a moving picture, which includes an intra predicting unit, **characterized in that** the intra predicting unit comprises:

a prediction signal generator, which receives a reconstructed signal that is part of an image signal of an adjacent block for which encoding ended before encoding of a block to undergo intra prediction, for generating and outputting prediction signals and storing the prediction signals in a prediction signal memory;
a prediction mode decision unit comprising:

first a cost calculator for generating first evaluation values based upon difference information indicative of differences between the prediction signals generated by said prediction signal generator and an input moving picture signal;
a preliminary selector for selecting and outputting to a second cost calculator at least two prediction modes based upon the first evaluation values;
the second cost calculator for frequency-converting difference information and generating second evaluation values with regard to the prediction modes output from said preliminary selector; and
a prediction mode selector for selecting an optimum prediction mode based upon the second evaluation values; and

a prediction signal call circuit for reading in a prediction signal, which corresponds to the prediction mode output from said prediction mode decision unit, from said prediction signal memory and outputting this signal as a result of intra prediction.

9. An apparatus for performing compression encoding of a moving picture, which includes an intra predicting unit, **characterized in that** the intra predicting unit comprises:

a prediction signal generator, which receives a reconstructed signal that is part of an image signal of an adjacent block for which encoding ended before encoding of a block to undergo intra prediction, for generating and outputting prediction signals and storing the prediction signals in a prediction signal memory;
a prediction mode decision unit including:

a first cost calculator for calculating and outputting first evaluation values based upon difference information indicative of differences between an input moving picture signal and outputs of said prediction signal generator;
a prediction mode selector for selecting an optimum prediction mode based upon the first evaluation values and outputting this prediction mode and difference information thereof; and
a second cost calculator for frequency-converting the difference information of the prediction mode, calculating a second evaluation value and outputting the prediction mode and the evaluation value as results of intra prediction; and

a prediction signal call circuit for reading in a prediction signal, which corresponds to the prediction mode output from said prediction mode decision unit, from said prediction signal memory and outputting this signal as a result of intra prediction.

10. An apparatus for performing compression encoding of a moving picture, which includes an intra predicting unit, **characterized in that** the intra predicting unit comprises:

a prediction signal generator, which receives a reconstructed signal that is part of an image signal of an adjacent block for which encoding ended before encoding of a block to undergo intra prediction, for generating and outputting prediction signals and storing the prediction signals in a prediction signal memory;
a prediction mode decision unit including:

a difference calculator for calculating difference information indicative of differences between a moving picture signal and outputs of said prediction signal generator;
a cost calculator for frequency-dividing the difference information of prediction modes output from said difference calculator, calculating evaluation values and outputting the evaluation values;
a prediction mode selector for selecting an optimum prediction mode based upon the evaluation values and outputting this prediction mode and difference information thereof; and

a prediction signal call circuit for reading in a prediction signal, which corresponds to the prediction mode output from said prediction mode decision unit, from said prediction signal memory and outputting this signal as a result of intra prediction.

11. The apparatus as claimed in any one of claims 8 to 10, wherein the apparatus further comprises:

a switch for outputting one of an output of said intra predicting unit and an output of means for detecting a motion vector from the moving picture signal and performing motion compensation; and
means for subtracting the output of said switch from the moving picture signal, orthogonally transforming and quantizing the result of subtraction to obtain a quantized signal, dequantizing and inverse-orthogonally transforming the quantized signal, adding the result thereof to the output of said switch and supplying the result of addition to said intra predicting unit as the reconstructed signal.

12. A method for performing compression encoding of a moving picture, **characterized in that** the method comprises the steps of:

calculating first evaluation values based upon differences information indicative of differences between an input moving picture signal and prediction signals that have been generated by an intra predicting unit;
preliminarily selecting a plurality of prediction modes based upon the first evaluation values;
calculating second evaluation values based upon difference information of the prediction modes preliminarily selected; and
selecting one prediction mode from the preliminarily selected prediction modes based upon the second evaluation values.

13. A method for performing compression encoding of a moving picture, **characterized in that** the method comprises the steps of:

calculating first evaluation values based upon difference information indicative of differences between an input moving picture signal and prediction signals that have been generated by an intra predicting unit for a case where a plurality of block sizes exist;
preliminarily selecting a plurality of prediction modes based upon the first evaluation values;
calculating second evaluation values based upon difference information of the prediction modes preliminarily selected;
selecting one prediction mode from the preliminarily selected prediction modes based upon the second evaluation values; and
selecting an optimum block size based upon the second evaluation values.

14. A method for performing compression encoding of a moving picture, **characterized in that** the method comprises the steps of:

changing a prediction mode discriminating method and selecting a prediction mode by an intra predicting unit on a per-block-size basis, for a case where a plurality of block sizes exist in said intra predicting unit; and
selecting a block size.

15. A method for performing compression encoding of a moving picture, **characterized in that** the method comprises the steps of:

selecting a prediction mode by an intra predicting unit on a per-block-size basis using any one of a plurality of prediction mode discriminating methods, for a case where a plurality of block sizes exist in said intra predicting unit; and
selecting a block size.

16. The method as claimed in claim 14 or 15, wherein processing executed by said intra predicting unit includes the steps of:

calculating first evaluation values based upon difference information indicative of differences between an input moving picture signal and prediction signals that have been generated by said intra predicting unit;
preliminarily selecting a plurality of prediction modes based upon the first evaluation values;
calculating second evaluation values based upon difference information of the prediction modes preliminarily selected; and
selecting one prediction mode from the plurality of preliminarily selected prediction modes based upon the second evaluation values;
the number of modes preliminarily selected differing for every block size.

17. The method as claimed in claim 14 or 15, wherein processing executed by said intra predicting unit includes the steps of:

calculating first evaluation values based upon difference information indicative of differences between an input moving picture signal and prediction signals that have been generated by said intra predicting unit;
preliminarily selecting a plurality of prediction modes based upon the first evaluation values;
calculating second evaluation values based upon difference information of the prediction modes preliminarily selected; and
selecting one prediction mode from the preliminarily selected prediction modes based upon the second evaluation values;
the number of modes preliminarily selected in said intra predicting unit differing for every block size.

18. The method as claimed in claim 16 or 17, wherein said step of selecting block size includes the steps of:

selecting block size based upon the second evaluation values that are output from a plurality of said intra predicting units, and outputting the selected block size and evaluation value thereof to a prediction-signal /prediction-mode memory;
said prediction-signal / prediction-mode memory storing, for every block size, a prediction signal and prediction mode that are output from said intra predicting units; and

said prediction-signal / prediction-mode memory outputting a prediction signal and prediction mode, which correspond to a block signal that is output from said means for selecting the block size, together with the evaluation value and block size as results of intra prediction.

19. A method for performing compression encoding of a moving picture, **characterized in that** the method comprises the following steps as intra prediction in the moving picture compression encoding:

receiving a reconstructed signal that is part of an image signal of an adjacent block for which encoding ended before encoding of a block to undergo intra prediction, and generating and outputting prediction signals and storing the prediction signals in a prediction signal memory;
generating first evaluation values based upon difference information indicative of differences between generated prediction signals and an input moving picture signal;
selecting and outputting at least two prediction modes based upon the first evaluation values;
frequency-converting difference information and generating second evaluation values with regard to the prediction modes that have been output;
selecting an optimum prediction mode based upon the second evaluation values; and
reading in a prediction signal, which corresponds to the prediction mode output, from said prediction signal memory and outputting this signal as a result of intra prediction.

20. A method for performing compression encoding of a moving picture, **characterized in that** the method comprises the following steps as intra prediction in the moving picture compression encoding:

receiving a reconstructed signal that is part of an image signal of an adjacent block for which encoding ended before encoding of a block to undergo intra prediction, and generating and outputting prediction signals and storing the prediction signals in a prediction signal memory;
calculating and outputting first evaluation values based upon difference information indicative of differences between an input moving picture signal and outputs of said prediction signal generator;
selecting an optimum prediction mode based upon the first evaluation values and outputting this prediction mode and difference information thereof;
frequency-converting the difference information of the prediction mode, calculating a second evaluation value and outputting the prediction mode and evaluation value as results of intra prediction; and
reading in a prediction signal, which corresponds to the prediction mode output, from said prediction signal memory and outputting this signal as a result of intra prediction.

21. A method for performing compression encoding of a moving picture, **characterized in that** the method comprises the following steps as intra prediction in the moving picture compression encoding:

receiving a reconstructed signal that is part of an image signal of an adjacent block for which encoding ended before encoding of a block to undergo intra prediction, and generating and outputting prediction signals and storing the prediction signals in a prediction signal memory;
calculating difference information indicative of differences between a moving picture signal and outputs of said prediction signal generator;
frequency-dividing the difference information of prediction modes, calculating evaluation values and outputting the evaluation values;
selecting an optimum prediction mode based upon the evaluation values and outputting this prediction mode and difference information thereof; and
reading in a prediction signal, which corresponds to the prediction mode output, from said prediction signal memory and outputting this signal as a result of intra prediction.

22. A computer program for causing a computer constituting a moving picture compression encoding apparatus to execute the following processing:

processing for calculating first evaluation values based upon difference information indicative of differences between an input moving picture signal and prediction signals that have been generated by an intra predicting unit;
processing for preliminarily selecting a plurality of prediction modes based upon the first evaluation value;
processing for calculating second evaluation values based upon difference information of the prediction modes preliminarily selected; and

processing for selecting one prediction mode from the preliminarily selected prediction modes based upon the second evaluation values.

23. A computer program for causing a computer constituting a moving picture compression encoding apparatus to execute the following processing, in a case where a plurality of block sizes exist:

processing for calculating first evaluation values based upon difference information indicative of differences between an input moving picture signal and prediction signals that have been generated by an intra predicting unit;
processing for preliminarily selecting a plurality of prediction modes based upon the first evaluation values;
processing for calculating second evaluation values based upon difference information of the prediction modes preliminarily selected;
processing for selecting one prediction mode from the preliminarily selected prediction modes based upon the second evaluation values; and
processing for selecting an optimum block size based upon the second evaluation values.

24. A computer program for causing a computer constituting a moving picture compression encoding apparatus to execute the following processing, in a case where a plurality of block sizes exist:

processing for changing a prediction mode discriminating method and selecting a prediction mode by said intra predicting unit on a per-block-size basis; and
processing for selecting a block size.

25. A computer program for causing a computer constituting a moving picture compression encoding apparatus to execute the following processing, in a case where a plurality of block sizes exist:

processing for selecting a prediction mode by said intra predicting unit on a per-block-size basis using any one of a plurality of prediction mode discriminating methods; and
processing for selecting a block size.

26. The program as claimed in claim 24 or 25, wherein said program causes the computer constituting said moving picture compression encoding apparatus to execute the following processing as processing by said intra predicting unit:

processing for calculating first evaluation values based upon difference information indicative of differences between an input moving picture signal and prediction signals that have been generated by said intra predicting unit;
processing for preliminarily selecting a plurality of prediction modes based upon the first evaluation values;
processing for calculating second evaluation values based upon difference information of the plurality of prediction modes preliminarily selected; and
processing for selecting one prediction mode from the plurality of preliminarily selected prediction modes based upon the second evaluation values;
the number of modes preliminarily selected differing for every block size.

27. The program as claimed in claim 24 or 25, wherein said program causes the computer constituting said moving picture compression encoding apparatus to execute the following processing:

processing for calculating first evaluation values based upon difference information indicative of differences between an input moving picture signal and prediction signals that have been generated by said intra predicting unit, the number of modes preliminarily selected in said intra predicting unit differing for every block size;
processing for preliminarily selecting a plurality of prediction modes based upon the first evaluation values;
processing for calculating second evaluation values based upon difference information of the prediction modes preliminarily selected; and
processing for selecting one prediction mode from the plurality of preliminarily selected prediction modes based upon the second evaluation values.

28. A computer program for causing a computer constituting a moving picture compression encoding apparatus to execute the following processing as intra prediction:

processing for inputting a reconstructed signal that is part of an image signal of an adjacent block for which encoding ended before encoding of a block to undergo intra prediction, and generating and outputting prediction signals and storing the prediction signals in a prediction signal memory;

processing for generating first evaluation values based upon difference information indicative of differences between the generated prediction signals and an input moving picture signal;

selecting and outputting at least two prediction modes based upon the first evaluation values;

processing for frequency-converting difference information and generating second evaluation values with regard to the prediction modes that have been output;

processing for selecting an optimum prediction mode based upon the second evaluation values; and

processing for reading in a prediction signal, which corresponds to the prediction mode output, from said prediction signal memory and outputting this signal as a result of intra prediction.

29. A computer program for causing a computer constituting a moving picture compression encoding apparatus to execute the following processing as intra prediction:

processing for inputting a reconstructed signal that is part of an image signal of an adjacent block for which encoding ended before encoding of a block to undergo intra prediction, and generating and outputting prediction signals and storing the prediction signals in a prediction signal memory;

processing for calculating and outputting first evaluation values based upon difference information indicative of differences between an input moving picture signal and outputs of said prediction signal generator;

processing for selecting an optimum prediction mode based upon the first evaluation values and outputting this prediction mode and difference information thereof;

processing for frequency-converting the difference information of the prediction mode, calculating second evaluation values and outputting the prediction mode and evaluation values as results of intra prediction; and

processing for reading in a prediction signal, which corresponds to the prediction mode output, from said prediction signal memory and outputting this signal as a result of intra prediction.

30. A computer program for causing a computer constituting a moving picture compression encoding apparatus to execute the following processing as intra prediction:

processing for inputting a reconstructed signal that is part of an image signal of an adjacent block for which encoding ended before encoding of a block to undergo intra prediction, and generating and outputting prediction signals and storing the prediction signals in a prediction signal memory;

processing for calculating difference information indicative of differences between a moving picture signal and outputs of said prediction signal generator;

processing for frequency-dividing the difference information of prediction modes, calculating evaluation values and outputting the evaluation values;

processing for selecting an optimum prediction mode based upon the evaluation values and outputting this prediction mode and difference information thereof; and

processing for reading in a prediction signal, which corresponds to the prediction mode output, from said prediction signal memory and outputting this signal as a result of intra prediction.

# FIG . 1

# FIG . 2

12 MOVING PICTURE SIGNAL

108

103

101  110  102

104  105  106  107

115 PREDICTION MODE

109

FILTER → PREDICTION SIGNAL MEMORY

PREDICTION SIGNAL MEMORY

FILTER → PREDICTION SIGNAL MEMORY

COST CALCU-LATOR → PRELI-MINARY SELEC-TOR → COST CALCU-LATOR → PREDICTION MODE SELECTOR → PREDICTION SIGNAL CALL UNIT

111 COST VALUE   112 DIFFERENCE INFO./   114 COST VALUE
113 SELECTED MODE

110 PREDICTION SIGNAL/
114 COST VALUE/
115 PREDICTION MODE

13 RECONSTRUCTED SIGNAL

110 PREDICTION SIGNAL

EP 1 675 404 A2

EP 1 675 404 A2

# FIG . 3

# FIG . 4

12 MOVING
PICTURE
SIGNAL

301
INTRA PREDICTOR

302
INTRA PREDICTOR

303
INTRA PREDICTOR

304
BLOCK-SIZE DECISION UNIT

305
PREDICTION-SIGNAL/ REDICTION-MODE MEMORY

306

307

308

309

1

13 RECONSTRUCTED SIGNAL

EP 1 675 404 A2

FIG. 5

409 PREDICTION SIGNAL
413 COST VALUE /
412 PREDICTION MODE

408 PREDICTION SIGNAL CALL UNIT

406 COST CALCULATOR

405 PREDICTION MODE SELECTOR

404 COST CALCULATOR

407

12 MOVING PICTURE SIGNAL

411 DIFFERENCE INFORMATION /
412 PREDICTION MODE

412 PREDICTION MODE

410 COST VALUE

412 PREDICTION MODE

409 PREDICTION SIGNAL

403

409 PREDICTION SIGNAL
402 PREDICTION SIGNAL MEMORY
401 FILTER

PREDICTION SIGNAL MEMORY

PREDICTION SIGNAL MEMORY
FILTER

13 RECONSTRUCTED SIGNAL

# FIG. 6

12 MOVING PICTURE SIGNAL

427

423

429 PREDICTION SIGNAL

424    425    426

429 PREDICTION SIGNAL/
431 COST VALUE/
432 PREDICTION MODE

421    422

428

FILTER → PREDICTION SIGNAL MEMORY

PREDICTION SIGNAL MEMORY

FILTER → PREDICTION SIGNAL MEMORY

DIFFER-ENCE CALCU-LATOR → COST CALCU-LATOR → PREDICTION MODE SELECTOR → PREDICTION SIGNAL CALL UNIT

430 DIFFERENCE INFORMATION    431 COST VALUE

432 PREDICTION MODE

13 RECONSTRUCTED SIGNAL

429 PREDICTION MODE

FIG . 7

EP 1 675 404 A2

# FIG . 9

FIG . 9

23

EP 1 675 404 A2

# FIG . 10

12 MOVING PICTURE SIGNAL

701 INTRA PREDICTOR

702 INTRA PREDICTOR

703 INTRA PREDICTOR

704 INTRA PREDICTOR

705 BLOCK-SIZE DECISION UNIT

706 PREDICTION-SIGNAL/ PREDICTION-MODE MEMORY

13 RECONSTRUCTED SIGNAL

# FIG . 11

FIG . 12